# EUROPÄISCHE PATENTANMELDUNG

(11) **EP 2 620 745 A1**
(43) Veröffentlichungstag der Anmeldung: **31.07.2013**
(21) Anmeldenummer: 12153162.8
(22) Anmeldetag: 30.01.2012
(51) Int. Cl.: G01C 15/00, G01S 17/89

(54) **Vermessungssystem mit einem Vermessungsgerät und einem Scanmodul**

(71) Anmelder: Hexagon Technology Center GmbH, 9435 Heerbrugg (CH)
(72) Erfinder: Siercks, Knut, CH-9402 Mörschwil (CH); Metzler, Bernhard, A-6850 Dornbirn (AT)
(74) Vertreter: Kaminski Harmann

(57) **Zusammenfassung**

Die vorliegende Erfindung betrifft ein Vermessungssystem (50) mit einem Vermessungsgerät (20) und einem Scanmodul (10) mit Befestigungsmitteln zur Befestigung des Scanmoduls (10) an einer Aufnahme, mit einem um eine Rotationsachse (12) motorisiert rotierbares Strahlumlenkelement (11) zur Ablenkung eines Scanlaserstrahls (60), wobei die Rotationsachse (12) in einem definierten Winkel relativ zur Schwenkachse (22) steht, und mit einer zweiten Winkelmessfunktionalität (13) zur Bestimmung eines Rotationswinkels aus einer Winkelstellung des Strahlumlenkelements (11). Zudem weist das Vermessungsgerät (20) eine derart ausgebildete Aufnahme auf, dass das Scanmodul (10) mittels der Befestigungsmittel auf dem Vermessungsgerät (20) in einer definierten Positionierung modulartig befestigbar ist.

## Beschreibung

Die Erfindung betrifft ein Vermessungssystem mit einem Vermessungsgerät und einem Scanmodul nach dem Oberbegriff des Anspruchs 1, ein erfindungsgemässes Scanmodul nach Anspruch 8, ein Vermessungsgerät nach Anspruch 13 sowie ein Scanverfahren nach Anspruch 14 und ein Computerprogrammprodukt nach Anspruch 15.

Zur Erfassung von Objekten oder Oberflächen werden häufig Verfahren verwendet, welche die Topographie einer Struktur, wie z.B. eines Bauwerks, sukzessive abtasten und dabei aufnehmen. Eine solche Topographie stellt dabei eine zusammenhängende und die Oberfläche des Objekts beschreibende Folge von Punkten oder aber ein entsprechendes Modell oder eine Beschreibung der Oberfläche dar. Ein gängiger Ansatz ist das Abtasten mittels eines Laserscanners, der jeweils die räumliche Position eines Oberflächenpunktes erfasst, indem durch den Laser die Entfernung zum angezielten Oberflächenpunkt gemessen und diese Messung mit den Winkelinformationen der Laseremission verknüpft werden. Aus diesen Entfernungs- und Winkelinformationen kann die räumliche Lage des erfassten Punktes bestimmt und die Oberfläche fortlaufend vermessen werden. In vielen Fällen wird parallel zu dieser rein geometrischen Erfassung der Oberfläche auch noch eine Bildaufnahme durch eine Kamera durchgeführt, welche neben der visuellen Gesamtansicht auch weitere Informationen, z.B. bzgl. der Oberflächentextur, bereitstellt.

So wird beispielsweise in der WO 97/40342 ein Verfahren beschrieben, welches durch ortsfest aufgestellte Scannersysteme eine Topographie aufnimmt. Für diese Systeme wird ein fixer Aufstellungspunkt gewählt, der als Basis eines durch Motoren bewirkten Scanvorgangs dient. Die dreidimensionale Ortsinformation des jeweiligen Oberflächenpunktes ist über die Entfernung zum gemessenen Punkt, die Winkelstellung im Zeitpunkt der Messung und den bekannten Standort der scannenden Vorrichtung ableitbar. Dabei sind die Scannersysteme speziell für die Aufgabe der Topographieerfassung ausgelegt und tasten eine Oberfläche durch Bewegung des Scannersystems oder durch Veränderung des Strahlgangs ab.

Daneben können scannende Funktionen in verschiedene andere Geräte als Zusatzfunktionen integriert werden. Aus der WO 2004/036145 ist beispielsweise ein geodätisches Messgerät bekannt, das von seiner Position aus innerhalb des erfassten Bereichs einen Laserstrahl zur Entfernungsmessung emittiert. Solche Messgeräte können ebenfalls zur abtastenden Erfassung von Oberflächen modifiziert bzw. ohne Modifikation betrieben werden. Ein Beispiel hierfür stellen motorisierte Theodoliten oder Totalstationen dar.

Andere Verfahren verwenden mobile Systeme, die eine zu erfassende Struktur durch eine Bewegung des Scannersystems abtasten bzw. die Abtastung unterstützen oder ergänzen. Solche Systeme eignen sich besonders zur Erfassung von linearen oder linear befahrbaren Strukturen, wie beispielsweise Gleisanlagen, Strassen, Tunnelsysteme oder Flugfelder.

Durch solche Erfassungsvorgänge des Stands der Technik werden Bilder bzw. topographische Daten bereitgestellt, die im Wesentlichen die Information über die räumliche Verteilung oder Anordnungsbeziehung von Oberflächenpunkten repräsentieren. Gegebenenfalls erlauben zusätzlich aufgenommene Bilder die Ableitung weiterer Informationen. Damit sind die Struktur und der Verlauf der Oberfläche vergleichsweise gut rekonstruierbar. Nachteilig sind jedoch die fehlenden qualitativen Angaben über die Art und Beschaffenheit der Oberfläche, insbesondere in Hinblick auf die innere Struktur oder Zusammensetzung. So erlauben parallel zur Abtastung aufgenommene Bilder zumeist die Identifikation unterschiedlicher Helligkeitswerte. Ferner beschreibt die EP 1 759 172 ein Scannersystem und ein Verfahren zur Erfassung von Oberflächen in spektral aufgelöster Form, das ein Ableiten von Oberflächeneigenschaften aus der dadurch gewonnen Information bereitstellt.

Derartige Laserscanner nach dem Stand der Technik befähigen einen Benutzer grosse Oberflächen und Objekte mit einem relativ geringen Zeitaufwand - in Abhängigkeit einer gewünschten Punkt-Zu-Punkt-Auflösung - vollständig und gegebenenfalls mit zusätzlichen Objektinformationen zu erfassen, jedoch genügt die Genauigkeit der dabei ableitbaren Punktkoordinaten nicht den hohen geodätischen Genauigkeitsstandards, wie diese beispielsweise für moderne Vermessungsgeräte, insbesondere für Totalstationen oder Thoedoliten, etabliert sind.

Moderne Totalstationen weisen in der Regel eine kompakte und integrierte Bauweise auf, wobei meist koaxiale Distanzmesselemente sowie Rechen-, Steuer- und Speichereinheiten in einem Gerät vorhanden sind. Abhängig von der Ausbaustufe der Totalstation können zudem eine Motorisierung der Anziel- bzw. Visiereinrichtung sowie - im Fall der Verwendung von Retroreflektoren (etwa eines Rundum-Prismas) als Ziel-Objekte - Mittel zur automatischen Zielsuche und -verfolgung integriert sein. Als Mensch-Maschine-Schnittstelle kann die Totalstation eine elektronische Anzeige-Steuereinheit - im Allgemeinen eine Mikroprozessor-Recheneinheit mit elektronischen Datenspeichermitteln - mit Display und Eingabemitteln, z.B. einer Tastatur, aufweisen. Der Anzeige-Steuereinheit werden die elektrosensorisch erfassten Messdaten zugeführt, sodass die Position des Zielpunkts durch die Anzeige-Steuereinheit ermittelbar, optisch anzeigbar und speicherbar ist. Aus dem Stand der Technik bekannte Totalstationen können weiters über eine Funkdatenschnittstelle verfügen zum Aufbau einer Funkverbindung zu externen Peripheriekomponenten wie z.B. zu einem handhaltbaren Datenerfassungsgerät, welches insbesondere als Datenlogger oder Feldrechner ausgebildet sein kann.

Zum Anvisieren bzw. Anzielen des zu vermessenden Zielpunkts weisen gattungsgemässe geodätische Vermessungsgeräte ein Zielfernrohr, wie z.B. ein optisches Teleskop, als Visiereinrichtung auf. Das Zielfernrohr ist im Allgemeinen um eine vertikale Stehachse und um eine horizontale Kippachse relativ zu einer Basis des Messgeräts drehbar, sodass das Fernrohr durch Schwenken und Kippen auf den zu vermessenden Punkt ausgerichtet werden kann. Moderne Geräte können additiv zum optischen Sichtkanal eine in das Zielfernrohr integrierte und beispielsweise koaxial oder parallel ausgerichtete Kamera zum Anvisieren mit Winkelsekundengenauigkeit aufweisen. Die dabei erfassbaren Bilder oder Bildsequenzen, insbesondere ein Live-Bild, können auf dem Display der Anzeige-Steuereinheit und/oder auf einem Display des zur Fernsteuerung verwendeten Peripheriegeräts - wie z.B. des Datenloggers - dargestellt werden. Die Optik der Visiereinrichtung kann dabei einen manuellen Fokus - beispielsweise eine Stellschraube zur Veränderung der Position einer Fokussieroptik - aufweisen oder über einen Autofokus verfügen, wobei das Verändern der Fokusposition z.B. durch Servomotoren erfolgt. Beispielsweise ist eine solche Visiereinrichtung eines geodätischen Vermessungsgeräts in der EP 2 219 011 beschrieben. Automatische Fokussiereinrichtungen für Zielfernrohre geodätischer Geräte sind z.B. aus der DE 197 107 22, der DE 199 267 06 oder der DE 199 495 80 bekannt.

Da Zielobjekte (z.B. die für geodätische Zwecke meist verwendeten Lotstäbe mit Zielmarke wie einem Rundum-Prisma) anhand der Visiereinrichtung trotz der oft bereitgestellten 30-fachen optischen Vergrösserung mit blossem Auge nicht genügend präzise angezielt werden können (d.h. nicht geodätische Genauigkeitsanforderungen entsprechend), weisen gängige Vermessungsgeräte inzwischen standardmässig eine automatische Zielverfolgungs-Funktion für als Ziel-Reflektor dienende Prismen (ATR: "Automatic Target Recognition") auf. Dafür sind gängigerweise eine weitere separate ATR-Lichtquelle - z.B. ein Multimodefaserausgang, die optische Strahlung mit einer Wellenlänge im Bereich von 850 nm emittiert - und ein spezieller, für diese Wellenlänge sensitiver ATR-Detektor (z.B. CCD- oder CMOS-Flächensensor) zusätzlich im Teleskop integriert. Beispielsweise wird in der EP 2 141 450 ein Vermessungsgerät mit Funktion zur automatischen Anzielung eines retroreflektierenden Ziels sowie mit automatischer Zielverfolgungsfunktionalität beschrieben.

Mit derartigen modernen Vermessungsgeräten können die Koordinaten von angemessenen Zielpunkten mit einer sehr hohen geodätischen Präzision bestimmt werden. Nachteilig dabei ist jedoch, dass eine grossflächige Objektvermessung z.B. mit einer Totalstation einen unverhältnismässig hohen Zeitaufwand - verglichen mit einem Messvorgang eines Laserscanners an dem Objekt - bedeutet.

Es ist daher Aufgabe der vorliegenden Erfindung ein Zusatzgerät bereitzustellen, welches in Zusammenwirken mit einem Basisgerät eine schnellere und verbesserte punktweise Erfassung einer Oberfläche ermöglicht.

Es ist eine weitere Aufgabe der Erfindung ein verbessertes Messinstrument bereitzustellen, welches neben einer instrumenteigenen hoch präzisen Zielpunktbestimmungsmöglichkeit eine Funktionalität zur schnellen Erfassung einer Vielzahl von Zielpunkten mit - relativ zu einer mehrfachen präzisen Zielpunktbestimmung - kleinem Zeitaufwand ermöglicht.

Eine weitere Aufgabe der Erfindung ist es, ein Vermessungsgerät nach dem Stand der Technik derart zu erweitern, dass dem Vermessungsgerät zusätzlich eine Scanfunktionalität bereitgestellt wird.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Ein erfindungsgemässes Vermessungssystem weist ein Vermessungsgerät, insbesondere Totalstation, Theodolit oder Lasertracker, mit einer Basis, einem auf der Basis angeordneten, um eine Schwenkachse schwenkbaren Aufbau, und einer Anzieleinheit auf, insbesondere Ziel-Fernrohr, wobei die Anzieleinheit wenigstens eine eine optische Zielachse definierende Emissionseinheit zur Emission eines ersten Laserstrahls, und eine erste Entfernungsmessfunktionalität zur Messung einer Entfernung zu einem Objekt aufweist. Zudem verfügt das Vermessungsgerät über eine erste Winkelmessfunktionalität zur hochpräzisen Erfassung zumindest eines durch eine relative Schwenkposition des Aufbaus zur Basis definierten Schwenkwinkels. Das Vermessungssystem weist ausserdem eine Steuerungs- und Verarbeitungseinheit zur Datenverarbeitung und zur Steuerung des Vermessungssystems auf.

Ferner verfügt das Vermessungssystem über ein Scanmodul mit Befestigungsmitteln zur Befestigung des Scanmoduls an einer mit den Befestigungsmitteln korrespondierenden Aufnahme, mit einem um eine Rotationsachse motorisiert rotierbares Strahlumlenkelement zur Ablenkung eines Scanlaserstrahls, wobei die Rotationsachse in einem aufgenommenen Zustand in einem definierten Winkel relativ zur Schwenkachse steht, insbesondere orthogonal, und mit einer zweiten Winkelmessfunktionalität zur Bestimmung eines Rotationswinkels aus einer Winkelstellung des Strahlumlenkelements. Darüber hinaus weist das Vermessungsgerät eine derart ausgebildete Aufnahme auf, dass das Scanmodul durch ein Zusammenwirken der Aufnahme mit den Befestigungsmittel auf dem Vermessungsgerät in einer definierten Positionierung modulartig befestigbar ist. Die Steuerungs- und Verarbeitungseinheit ist zudem derart ausgebildet, dass der jeweilige Rotationswinkel, der jeweilige Schwenkwinkel und die jeweilige Entfernung für einen Punkt auf dem Objekt verknüpft werden, sodass durch die Verknüpfung jeweils eine Punkt-Position definiert ist, und eine eine Anzahl der Punkt-Positionen aufweisende Punktwolke erzeugbar ist.

Mit einem derartigen Vermessungssystem kann durch die rotierende Bewegung des Umlenkelements, beispielsweise eines Spiegels, und der Ablenkung des darauf auftreffenden Scanlaserstrahls eine Laserebene bzw. eine Laserfläche, insbesondere höherer Ordnung, definiert werden. Dadurch dass das Scanmodul, in welchem der Spiegel rotiert, mittels des als Schwenkvorrichtung dienenden Vermessungsgeräts um eine zweite Achse geschwenkt wird, kann die Laserebene nun fortlaufend versetzt werden und somit eine Umgebung fortlaufend mit dem emittierten Laserstrahl abgetastet werden. Mit den beiden Winkelmessern wird zudem zu jedem Punkt, auf dem der Laserstrahl auftrifft, reflektiert wird und mit einem Detektor zum Zweck der Distanzmessung detektiert wird, eine Emissionsrichtung des Laserstrahls zum einen relativ zum Scanmodul und zum zweiten relativ zur Basis des Vermessungsgeräts bestimmt. Die Distanzmessung kann dabei z.B. nach dem Phasenmessprinzip oder mittels einer Laufzeitbestimmung durchgeführt werden. Durch die mittels der Steuerungs- und Verarbeitungseinheit vorgenommene Verknüpfung von jeweils zu einem Punkt gehörenden gemessenen Winkel- und jeweiligen Distanzgrössen können Wertearrays erzeugt werden, wobei jedes Array eine Koordinate des gemessenen Punkts repräsentiert. Beispielsweise können gleichzeitig bzw. innerhalb eines bestimmten Zeitintervalls bzw. in definierten Zeitabständen erfasste Winkel und Distanzen verknüpft werden. Eine die vermessene Umgebung verkörpernde Punktwolke kann weiters durch ein Zusammenfügen einer Vielzahl derartiger Wertearrays erzeugt werden. Erfindungsgemäss ist das Scanmodul derart ausgebildet, dass es von der Schwenkeinheit abnehmbar bzw. darauf modulartig mittels spezifisch dafür vorgesehener Befestigungsmittel aufsetzbar ist. Dabei kann beispielsweise ein Stativ mit einer mit einem Dreibein fest verbundener Basis und einem auf der Basis angebrachten, relativ dazu schwenkbaren Aufbau als Schwenkvorrichtung für das erfindungsgemässe Vermessungssystem dienen. Zusätzlich können an einer derartigen Vorrichtung Aufnahmen angeordnet sein, die jeweils dafür geeignet sind ein das Scanmodul aufzunehmen, sodass eine definierte Verbindung zwischen den Komponenten entsteht, welche auf einfache Weise wieder lösbar ist. Eine hierfür geeignete Aufnahme und korrespondierende Befestigungsmittel können prinzipiell nach einem Stecker-Steckdosen-Prinzip zusammenwirken und ausgebildet sein.

Insbesondere kann das Scanmodul erfindungsgemäss eine Strahldurchtrittseinheit aufweisen und die Anzieleinheit derart ausrichtbar sein, dass der erste Laserstrahl in einem Einkoppelzustand vermittels der Strahldurchtrittseinheit in das Scanmodul einkoppelbar ist und vermittels des Strahlumlenkelements um die Rotationsachse als Scanlaserstrahl rotierend ablenkbar ist, insbesondere wobei ein am Objekt reflektierte Scanlaserstrahl vermittels der Strahldurchtrittseinheit aus dem Scanmodul auskoppelbar ist.

Das Scanmodul des Vermessungssystem kann erfindungsgemäss zudem eine derart ausgebildete Erfassungseinheit aufweisen, dass eine Auftreffposition des im Einkoppelzustand mittels des Strahlumlenkelements auf die Erfassungseinheit umlenkbaren ersten Laserstrahls auf der Erfassungseinheit erfassbar ist, wobei in Abhängigkeit der Auftreffposition ein eine relative Positionierung des Scanmoduls zum Vermessungsgerät angebender Positionierungsparameter erzeugbar ist, insbesondere wobei mittels des Positionierungsparameters die Punkt-Positionen korrigierbar sind.

Bei der Anordnung des Scanmoduls auf dem Vermessungsgerät, wobei die Befestigungsmittel des Scanmoduls mit den Aufnahmen des Vermessungsgeräts lösbar verbunden sind, kann der mittels der Anzieleinheit emittierbare erste Laserstrahl durch ein definiertes Ausrichten der Anzieleinheit derart ausgerichtet werden, dass der Strahl auf die Strahldurchtrittseinheit gerichtet ist und durch diese in das Scanmodul transmittiert bzw. eingekoppelt wird. Die Strahldurchtrittseinheit kann hierfür z.B. mit einem spezifischen optisch transparenten Material ausgebildet sein, sodass jeweils diejenige Strahlung der Emissionseinheit des Vermessungsgeräts mit einer spezifischen Wellenlänge durch das Material transmittiert wird. Die Laserstrahlung wird dann, beispielsweise mittels Spiegel, Prismen und/oder Linsen, zum Strahlumlenkelement geführt und dort in einem bestimmten Winkel abgelenkt und aus dem Scanmodul emittiert. Durch die Rotation des Strahlumlenkelements (und durch das gleichzeitige Schwenken des Vermessungsgeräts) und das Aussenden, das Reflektieren an einem Objekt und das Empfangen des Strahls kann so ein Scannen des Objekts erfolgen. Der reflektierte Strahl kann somit korrespondierend mit einem Emissionsstrahlgang aus dem Scanmodul ausgekoppelt und in das Vermessungsgerät eingekoppelt werden und somit wieder am Vermessungsgerät empfangen und die Entfernung zum Objekt somit mittels der Entfernungsmessfunktionalität der Anzieleinheit gemessen werden.

Erfindungsgemäss können ausserdem durch das Erfassen des von dem Vermessungsgerät emittierten Laserstrahls mit einer spezifischen Erfassungseinheit auf Seiten des Scanmoduls, z.B. mit einem Flächensensor (z.B. CMOS oder CCD-Array), Parameter ermittelt werden, mit welchen eine Bestimmung der Positionierung des Scanmoduls auf dem Vermessungsgerät vollzogen werden kann. Beispielsweise kann aus einer Ablage des auftreffenden Laserstrahls aus einem Bildzentrum der Erfassungseinheit - in Abhängigkeit der Richtung und Entfernung vom Zentrum - eine Information bezüglich der Position und Orientierung des Scanmoduls relativ zum Vermessungsgerät gewonnen werden. Die dabei ermittelten Parameter oder erzeugten Messsignale können der Steuerungs- und Verarbeitungseinheit zur Bestimmung von z.B. Korrekturparametern zur Verfügung gestellt werden. Diese wiederum können zudem zur allfälligen Kompensation von Messwerten herangezogen werden oder können einem Benutzer graphisch, z.B. auf einem Display, angezeigt werden, sodass dieser eine Positionskorrektur der beiden Komponenten (Vermessungsgerät und Scanmodul) relativ zueinander vornehmen kann.

Ferner kann das Scanmodul erfindungsgemäss eine Strahlquelle zur Emission eines zweiten Laserstrahls als Scanlaserstrahl aufweisen und der Scanlaserstrahl vermittels des Strahlumlenkelements um die Rotationsachse rotierend ablenkbar sein, insbesondere wobei das Scanmodul eine zweite Entfernungsmessfunktionalität zur Entfernungsmessung, insbesondere mittels des Scanlaserstrahls, aufweist.

Durch die Anordnung dieser Strahlquelle z.B. im Scanmodul kann der Laserstrahl zum Scannen eines Objekts unabhängig von dem Vermessungsgerät emittiert werden und ein Einkoppeln des Stahls in das Scanmodul muss nicht vorgenommen werden, um die Scanfunktionalität bereitzustellen. Das Scanmodul kann zudem über eine weitere Entfernungsmessfunktionalität verfügen und durch ein Empfangen des reflektierten Scanstrahls am Scanmodul eine Entfernung zum Objekt messbar sein. In dieser Konfiguration kann somit sowohl der Rotationswinkel als auch die Entfernung seitens des Scanmoduls ermittelt werden. Der Schwenkwinkel kann mittels des Vermessungsgeräts bestimmt werden.

Im Allgemeinen kann der Schwenkwinkel an eine dem Scanmodul zugeordneten Steuerungs- und Verarbeitungseinheit übermittelt werden und die Verknüpfung, Weiterverarbeitung und/oder Bereitstellung von Schwenkwinkel, Rotationswinkel und Entfernung kann dort erfolgen. Insbesondere können Rotationswinkel und Entfernung an eine dem Vermessungsgerät zugeordnete Steuerungs- und Verarbeitungseinheit übertragen und seitens des Vermessungsgeräts verknüpft und bereitgestellt werden. Weiters können die Daten zur Verknüpfung, Verarbeitung und/oder Bereitstellung einer mobilen oder stationären Einheit, z.B. Arbeitscomputer, Laptop oder Fernbedienung für das System, mit Steuerungs- und Verarbeitungseinheit zur Verfügung gestellt werden. Die Datenübertragung kann ferner kabelgebunden, mittels Funk, WLAN, Infrarot oder via Bluetooth erfolgen.

Insbesondere kann das Vermessungssystem mindestens einen Abstandsmesssensor zur Messung eines Abstands zwischen dem Scanmodul und dem Vermessungsgerät im aufgenommenen Zustand zur Erzeugung eines weiteren, die relative Positionierung des Scanmoduls zum Vermessungsgerät angebenden Positionierungsparameters aufweisen.

Mit einem derartigen Sensor kann eine relative Position des Scanmoduls auf dem Vermessungsgerät präzise bestimmt werden, insbesondere dann wenn zu dieser Positionsbestimmung drei - nicht auf einer Geraden liegende - solche Sensoren vorgesehen sind. So können Abstände zwischen den Komponenten gemessen und aus einem in Bezugsetzen der Abstände beispielsweise eine relative Neigung der Komponenten zueinander bestimmt werden. Ist demnach die Position und Ausrichtung des Vermessungsgeräts bekannt, kann mittels der Sensoren eine eindeutige Bestimmung der Ausrichtung und - bei einer definierten Positionierung des Scanmoduls auf dem Vermessungsgerät - gegebenenfalls der Position des Scanmoduls erfolgen. Dem System können aus diesen Messungen Informationen zur Position und Ausrichtung z.B. in einer definierten Parameterform bereitgestellt und beispielsweise zu Zwecken einer Kompensation oder Anpassung von zu bestimmenden Koordinaten weiterverarbeitet werden, insbesondere seitens der Steuerungs- und Verarbeitungseinheit.

Ausserdem kann das Vermessungssystem erfindungsgemäss eine zumindest zweikomponentige Zentriervorrichtung zur definierten Positionierung des Scanmoduls auf dem Vermessungsgerät aufweisen, wobei eine erste Komponente dem Scanmodul und eine zweite Komponente dem Vermessungsgerät zugeordnet ist, insbesondere wobei eine Positionierungsgenauigkeit mittels Sensoren zur Bestimmung einer relativen Positionierung der ersten zur zweiten Komponente messbar ist.

Um das Scanmodul in einer definierten Position und Ausrichtung auf dem Vermessungsgerät oder - im Allgemeinen - auf einer Schwenkvorrichtung mit einem relativ zu einer Basis schwenkbaren Aufbau befestigen zu können, kann eine derartige Zentriervorrichtung in das Vermessungssystem integriert werden bzw. daran angeordnet sein. Durch ein Zusammenwirken der ersten Komponente dieser Zentriervorrichtung mit der Zweiten, wobei jeweils eine der Komponenten dem Scanmodul und die Andere dem Vermessungsgerät bzw. der Schwenkvorrichtung zugeordnet sind, kann bei einer Montage des Scanmoduls auf dem Vermessungsgerät eine hohe Montagepräzision erreicht werden. Zudem können Sensoren vorgesehen sein, mit welchen Abstände der Zentrierkomponenten zueinander und damit eine Zentriergenauigkeit bestimmt werden können. Eine solche Zentriervorrichtung kann beispielsweise aus einem Zapfen als erste Komponente und einer Aufnahme als zweite Komponente, die zur präzisen Aufnahme des Zapfens, insbesondere unter Einhaltung einer definierten Toleranz, ausgestaltet ist, bestehen. An den in einem Zentrierzustand dem Zapfen zugewandten Seiten der Zapfenaufnahme können zudem Sensoren zur Abstandsmessung zum Zapfen angeordnet sein. Eine bekannte, lösbare Präzisionsverbindung mit spielfreier Zwangszentrierung ist als Schnittstelle zum Dreifuss am Theodolitenunterteil bekannt. Die Verbindung des Scanmoduls mit dem Vermessungsgerät kann in einer vergleichbaren Art ausgeführt sein.

Ausserdem kann das Vermessungssystem erfindungsgemäss eine Kamera zur Erfassung eines Bildes aufweisen. Mittels dieser Kamera kann ein Bild der zu vermessenden Umgebung bzw. des Objekts aufgenommen werden, wobei im Bild erfasste Informationen zur Charakterisierung des Objekts bzw. dessen Oberfläche herangezogen werden können. Durch eine Verknüpfung der Bildinformation mit den im Scanprozess erzeugten Messdaten können zusätzliche Objekteigenschaften, insbesondere punktuell aufgelöst, abgeleitet und weiterverarbeitet werden. Weiters kann die Kamera derart im Vermessungssystem angeordnet und ausgebildet sein, dass ein Erfassen des Bildes vermittels des Strahlumlenkelements erfolgt, d.h. einfallendes Licht kann mit Hilfe des Strahlumlenkelements auf die Kamera gelenkt werden. Darüber hinaus kann das Strahlumlenkelement durch einen Spiegel, insbesondere durch einen Polygonspiegel, verkörpert sein. Die Ablenkung des Laserstrahls kann somit in Abhängigkeit der Ausgestaltung des Spiegels und seiner relativen Neigung zu einer Einfallrichtung des Laserstrahls in einem definierten Winkel erfolgen. Weiters kann die Umlenkung des Laserstrahls dadurch innerhalb einer vollständigen Umdrehung des Polygonspiegels mehrmalig erfolgen.

Erfindungsgemäss kann ausserdem eine Neigung oder Verkippung des Scanmoduls relativ zum Vermessungsgerät mittels eines Abscannens einer markanten Struktur (mit dem Scanmodul und dem Vermessungsgerät) bestimmbar sein, wobei die relative Neigung in Abhängigkeit eines Vergleichs einer mittels des Scanmoduls erzeugten, die markante Struktur repräsentierenden Scanpunktwolke und einer mittels des Vermessungsgeräts erzeugten, die markante Struktur repräsentierenden Vermessungspunktwolke bestimmt wird.

Die Erfindung betrifft weiterhin ein erfindungsgemässes Scanmodul für ein erfindungsgemässes Vermessungssystem mit einem um eine Rotationsachse motorisiert rotierbaren Strahlumlenkelement zur Ablenkung eines Scanlaserstrahls und einer Winkelmessfunktionalität zur Bestimmung eines Rotationswinkels aus einer Winkelstellung des Strahlumlenkelements. Ferner weist das Scanmodul Befestigungsmittel zur Befestigung des Scanmoduls an einer mit den Befestigungsmitteln korrespondierenden Aufnahme auf, wobei das Scanmodul durch ein Zusammenwirken der Befestigungsmittel mit der an einem Vermessungsgerät angeordneten Aufnahme, insbesondere Totalstation, Theodolit oder Lasertracker, auf dem Vermessungsgerät in einer definierten Positionierung modulartig befestigbar ist. Zudem ist das Scanmodul zur Übergabe des Rotationswinkels an eine Steuerungs- und Verarbeitungseinheit gemäss dem erfindungsgemässen Vermessungssystem ausgebildet.

Ein solches Scanmodul bzw. ein solcher Aufsatzscanner kann durch die Rotation des Laserstrahls um die Rotationsachse eine Laserebene erzeugen, wobei sowohl der emittierte Laserstrahl als auch ein an einem Objekt reflektierter Strahl mittels des Strahlumlenkelements geführt bzw. entsprechend einer bestimmten Messrichtung von der Strahlquelle zum Objekt und vom Objekt zum Detektor gelenkt werden kann. Durch einen eingebauten Winkelmesssensor können ferner die jeweilige Emissions- und Empfangsrichtung des Strahls bestimmt werden. Werden nun mittels des Laserstrahls Entfernungen zu Punkten gemessen und diese Entfernungen mit den zum Messzeitpunkt vorliegenden Winkeln verknüpft, so können aus jeder Entfernungs-WinkelKombination eine Koordinate des jeweiligen Zielpunktes bestimmt werden und mittels einer Ansammlung bzw. Kumulation dieser Punkte die Punktwolke erzeugt werden. Des Weiteren kann das Scanmodul mit den Befestigungsmitteln auf einer Vorrichtung, insbesondere mittels einer dafür vorgesehenen Aufnahmevorrichtung, platziert und befestigt werden. Mittels dieser Vorrichtung kann das Scanmodul um eine zweite Achse, die senkrecht zur Rotationsachse des Strahlumlenkelements steht, geschwenkt bzw. rotiert werden, wobei damit die Laserebene entsprechend geschwenkt wird und somit eine Erzeugung einer Punktwolke einer durchschwenkten Messumgebung oder eines abgeschwenkten Objekts durchführbar ist. Die seitens des Scanmoduls dabei erzeugten Daten, insbesondere Rotationswinkel, können der Steuerungs- und Verarbeitungseinheit, z.B. einer Totalstation, zur Verknüpfung von Rotationswinkeln mit Schwenkwinkeln und Entfernungen zur Verfügung gestellt werden.

Ferner kann das Scanmodul erfindungsgemäss eine Strahldurchtrittseinheit zur Einkopplung und/oder Auskopplung des Scanlaserstrahls aufweisen, sodass zumindest der eingekoppelte Scanlaserstrahl vermittels des Strahlumlenkelements um die Rotationsachse rotierend ablenkbar ist. Hierdurch kann ein Laserstrahl von einer körperlich vom Scanmodul getrennten Strahlquelle in das Scanmodul eingestrahlt werden und derart geführt werden, dass der Strahl als Scanlaserstrahl verwendet und mittels des Strahlumlenkelements abgelenkt werden kann. Die Entfernungsmessung zum Objekt kann dabei ebenfalls anhand des eingekoppelten Laserstrahls erfolgen. Dazu kann der am Objekt reflektierte Strahl wiederum seitens des Scanmoduls empfangen, von Strahlumlenkelement abgelenkt und durch die Strahldurchtrittseinheit, die beispielsweise mit optisch transparentem Material ausgebildet ist, ausgekoppelt werden, sodass der ausgekoppelte Strahl von einem Detektor zum Zweck der Entfernungsmessung erfasst wird.

Insbesondere kann das Scanmodul erfindungsgemäss eine Erfassungseinheit zur Erfassung des Scanlaserstrahls aufweisen, wobei die Erfassungseinheit eine Entfernungsmessfunktionalität zur Entfernungsmessung zu einem Objekt und/oder einen positionssensitiven Sensor zur Bestimmung einer Auftreffposition des Scanlaserstrahls auf einem Sensor aufweist. Ausserdem kann das Scanmodul erfindungsgemäss eine Strahlquelle zur Emission des Scanlaserstrahls aufweisen und der Scanlaserstrahl vermittels des Strahlumlenkelements um die Rotationsachse rotierend ablenkbar sein. Mit diesen Ausführungen des Scanmoduls kann zum einen der Strahl unabhängig von externen Strahlquellen emittiert werden und zum zweiten die Entfernungsmessung ebenfalls unabhängig von zusätzlichen Entfernungsmessern bestimmt werden. In Kombination dieser Ausführungen können sowohl die Rotationswinkel als auch die Entfernungen für Punkte am Objekt mit dem Scanmodul bestimmt werden. Die Strahlquelle kann dabei einen Laserstrahl derart emittieren, dass dieser auf das Strahlumlenkelement trifft um von dort auf das Objekt umgelenkt wird. Ferner können weitere Strahlführungsmittel vorgesehen sein, die den emittierten Strahl derart führen, dass dieser auf das Strahlumlenkelement auftrifft und gegebenenfalls der reflektierte Laserstrahl hin zum Detektor geführt wird. Die Laserstrahlquelle kann dabei beispielsweise einen weitgehend kollimierten Laserstrahl oder einen definiert aufgeweiteten, divergenten Strahl emittieren.

Das erfindungsgemässe Scanmodul kann weiters eine derart ausgebildete Datenschnittstelle aufweisen, dass Information, insbesondere Winkelinformation und/oder Entfernungsinformation, vom Scanmodul zu einem mittels der Befestigungsmittel mit dem Scanmodul verbundenen Gerät, insbesondere Vermessungsgerät, übertragbar ist, insbesondere wobei die Information zwischen Scanmodul und Gerät übertragbar ist. Mittels einer derartigen Datenschnittstelle können die mit dem Scanmodul bestimmten Rotationswinkel beispielsweise an die Verarbeitungseinheit eines Vermessungsgeräts übertragen werden und dort mit Schwenkwinkel- und Entfernungsinformation für jeweilige Punkte verknüpft werden. Mit einer solchen Verknüpfung können jeweils Koordinaten für den jeweiligen Punkt erzeugt werden. Ferner kann der Datentransfer in umgekehrter Richtung, vom Vermessungsgerät zum Scanmodul, erfolgen und die Verarbeitung der Information mit einer entsprechenden Steuerungs- und Verarbeitungseinheit seitens des Scanmoduls ausgeführt werden.

Das Scanmodul kann erfindungsgemäss eine Steuerungs- und Verarbeitungseinheit zur Datenverarbeitung und zur Steuerung der Ausrichtung des Strahlumlenkelements aufweisen, wobei die Steuerungs- und Verarbeitungseinheit derart ausgebildet ist, dass nach Erhalt einer vom Vermessungsgerät erzeugten Schwenkwinkelinformation und insbesondere einer die Entfernung zu einem Objekt angebenden Entfernungsinformation der jeweilige Rotationswinkel, der jeweilige Schwenkwinkel und die jeweilige Entfernung für einen Punkt auf dem Objekt verknüpft werden, sodass durch die Verknüpfung jeweils eine Punkt-Position auf dem Objekt definiert ist. Zudem kann eine eine Anzahl der Punkt-Positionen aufweisende Punktwolke erzeugbar sein.

Insbesondere kann das erfindungsgemässe Scanmodul einen Neigungssensor und/oder eine Kamera zur Erfassung eines Bildes aufweisen. Mittels des Neigungssensors kann so eine Positionierung des Scanmoduls, insbesondere unabhängig von einer Positionierung und Ausrichtung eines Vermessungsgeräts, bestimmt werden und das Scanmodul in eine definierte Position gebracht werden. Beispielsweise kann so mittels einer Libelle eine Horizontierung des Moduls eingestellt oder überprüft werden oder mittels eines elektronischen Neigungsmessers eine Kompensation bzw. Korrektur erfasster Punktkoordinaten erfolgen. Mit einer zusätzlich angeordneten Kamera können ferner z.B. Bilder derjenigen Umgebung erfasst werden, welche durch das Scanmodul bzw. durch das Schwenken der Laserebene erfasst werden. Dabei können durch ein Zusammenfügen mehrerer Bilder Panoramabilder erzeugt werden, welche die komplette Messumgebung repräsentieren. Weiterhin können Bildinformationen mit erzeugten Daten des Scanmoduls verknüpft und damit zusätzliche Oberflächeninformationen, z.B. Farbe, Konturen oder Reflexionsverhalten, vermessener Objekte erzeugt werden.

Die Erfindung betrifft ausserdem ein Vermessungsgerät, insbesondere Totalstation, Theodolit oder Lasertracker, für ein erfindungsgemässes Vermessungssystem, mit einer Basis, einem auf der Basis angeordneten, um eine Schwenkachse schwenkbaren Aufbau und einer Anzieleinheit, insbesondere Ziel-Fernrohr, wobei die Anzieleinheit wenigstens eine eine optische Zielachse definierende Emissionseinheit zur Emission eines Laserstrahls und eine Entfernungsmessfunktionalität zur Messung einer ersten Entfernung zu einem Objekt aufweist. Zudem ist eine Winkelmessfunktionalität zur hochpräzisen Erfassung zumindest eines durch eine relative Schwenkposition des Aufbaus zur Basis definierten Schwenkwinkels vorgesehen.

Das Vermessungsgerät weist weiter eine derart ausgebildete Aufnahme auf, dass ein Scanmodul durch ein Zusammenwirken der Aufnahme mit Befestigungsmitteln des Scanmoduls auf dem Vermessungsgerät in einer definierten Positionierung modulartig befestigbar ist. Ferner sind eine derart ausgebildete Datenschnittstelle, dass Information, insbesondere Winkelinformation und/oder Entfernungsinformation, erhaltbar ist, insbesondere vom Scanmodul, und eine Steuerungs- und Verarbeitungseinheit zur Datenverarbeitung und zur Steuerung des Vermessungsgeräts vorgesehen, wobei die Steuerungs- und Verarbeitungseinheit derart ausgebildet ist, dass nach Erhalt einer vom Scanmodul erzeugten

Rotationswinkelinformation und insbesondere einer eine zweite Entfernung zum Objekt angebenden Entfernungsinformation der jeweilige Rotationswinkel, der jeweilige Schwenkwinkel und die jeweilige erste oder zweite Entfernung für einen Punkt auf dem Objekt verknüpft werden, sodass durch die Verknüpfung jeweils eine Punkt-Position auf dem Objekt definiert ist. Eine eine Anzahl der Punkt-Positionen aufweisende Punktwolke ist zudem erzeugbar.

Mit einem erfindungsgemässen Vermessungsgerät kann durch eine Kombination mit einem erfindungsgemässen Scanmodul ein System erzeugt werden, welches sowohl die Vorteile z.B. eines Laserscanners, insbesondere hinsichtlich der Messgeschwindigkeitsvorteile, als auch die Vorteile z.B. einer Totalstation, insbesondere hinsichtlich der Messgenauigkeit, in sich vereint. Mittels des Vermessungsgeräts kann beispielsweise ein Zielpunkt hochpräzise vermessen und dessen Koordinaten exakt bestimmt werden. Wird jedoch z.B. ein schneller Überblickscan einer Umgebung zur Orientierung, groben Anzielung oder Erstellung eines Geländemodells benötigt, kann aufgrund einer deutlich höheren Messgeschwindigkeit ein auf dem Vermessungsgerät angebrachtes Scanmodul mittels Antrieben zur Ausrichtung der Anzieleinheit geschwenkt und so ein schneller Umgebungsscan durchgeführt werden. Das Vermessungsgerät kann somit eine Systemkomponente des Vermessungssystems bilden, mit welcher ein Scanmodul kombiniert werden kann und welches zur Schwenkung des Scanmoduls ausgebildet ist. Hierfür können mit Befestigungsmitteln des Scanmoduls korrespondierende Aufnahmen zur Befestigung vorgesehen sein.

Ein weiterer Aspekt der Erfindung betrifft ein Scanverfahren zum Erzeugen einer Punktwolke mit
● einem Emittieren eines Scanlaserstrahls,
● einem rotativen Ablenken des Scanlaserstrahls um eine Rotationsachse,
● einem Schwenken des Scanlaserstrahls um eine in einem definierten Winkel, insbesondere senkrecht, zur Rotationsachse stehende Schwenkachse,
● einem Empfangen des Scanlaserstrahls nach Reflexion an einem Objekt,
● einem Entfernungsmessen zum Objekt und jeweiligem Bestimmen von Rotations- und Schwenkwinkeln,
● einem Verknüpfen des jeweiligen Rotationswinkels, des jeweiligen Schwenkwinkels und der jeweiligen Entfernung für einen Punkt auf dem Objekt, sodass durch das Verknüpfen jeweils eine Punkt-Position auf dem Objekt definiert wird, und
● einem Erzeugen einer eine Anzahl der Punkt-Positionen aufweisende Punktwolke.

Dabei erfolgt zumindest das rotative Ablenken des Scanlaserstrahls mittels eines erfindungsgemässen Scanmoduls. Insbesondere kann erfindungsgemäss zumindest das Schwenken des Scanlaserstrahls mittels eines erfindungsgemässen Vermessungsgeräts erfolgen.

Insbesondere kann ein Austausch eines Synchronisationssignals erfolgen, um ein jeweiliges Verknüpfen der Messwerte (z.B. Rotationswinkel, Schwenkwinkels, Entfernung für einen Punkt auf dem Objekt) der Sensoren zu steuern bzw. zu koordinieren.

Erfindungsgemäss ist weiters ein Computerprogrammprodukt mit Programmcode, der auf einem maschinenlesbaren Träger gespeichert ist, zur Steuerung bzw. Durchführung des erfindungsgemässen Scanverfahrens zum Erzeugen einer Punktwolke vorgesehen, insbesondere wenn das Programm auf einer als Steuerungs- und Verarbeitungseinheit eines erfindungsgemässen Vermessungssystems ausgebildeten elektronischen Datenverarbeitungseinheit ausgeführt wird

Das erfindungsgemässe Verfahren, das erfindungsgemässe Vermessungssystem, das erfindungsgemässe Scanmodul und Vermessungsgerät werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1a-d: jeweils eine Ausführungsform eines erfindungsgemässen Scanmoduls;
- Fig. 2a-d: jeweils ein erfindungsgemässes Vermessungssystem mit einem Vermessungsgerät und einem daran befestigten Scanmodul;
- Fig. 3: eine weitere Ausführungsform eines erfindungsgemässen Vermessungssystems mit Vermessungsgerät und Scanmodul mit Abstandssensoren und einem auf einen Detektor gerichteten Laserstrahl;
- Fig. 4a-c: eine weitere Ausführungsform eines erfindungsgemässen Vermessungssystems mit einer Zentriervorrichtung;
- Fig. 5: einen Messvorgang mit einem erfindungsgemässen Vermessungssystem zur Kalibrierung;
- Fig. 6a-b: jeweils eine weitere Ausführungsform eines erfindungsgemässen Vermessungssystems mit einer Schwenkvorrichtung und einem Scanmodul;
- Fig. 7: eine weitere Ausführungsform eines erfindungsgemässen Vermessungssystem mit Schwenkvorrichtung, Scanmodul und einem aufgesetzten GNSS-Modul.

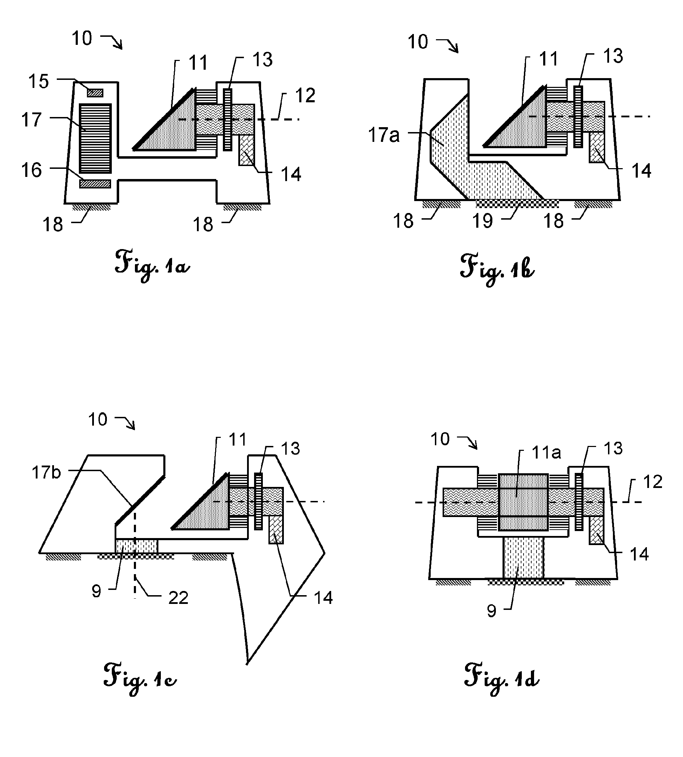

Die Figuren 1a bis 1d zeigen jeweils eine Ausführungsform eines erfindungsgemässen Scanmoduls 10 bzw. eines Aufsatzscanners, welcher mittels einer Befestigungsvorrichtung 18 auf einer Schwenkvorrichtung, z.B. einem Theodolit oder einer Totalstation, montiert werden und diese Vorrichtung somit um eine ScanFunktionalität erweitern kann.

In einer ersten Ausführungsform (Figur 1a) weist der Aufsatzscanner 10 einen Spiegel 11 als Umlenkelement auf, welcher um eine horizontale Achse 12 rotierbar ist, wobei die Rotation durch einen Motor 14 bewirkt und ein Rotationswinkel mit einem Winkelmesssensor 13 erfasst werden kann. Zudem ist das Modul 10 mit einem Lasermodul 15, insbesondere mit einer Strahlquelle wie z.B. einer Laserdiode zur Emission eines Laserstrahls und mit einer und Empfangseinheit zur Detektion reflektierter Laserstrahlung, ausgestattet. Der emittierte Laserstrahl kann über ein optisches Strahlführungselement 17 auf den Spiegel 11 und von dort auf einen Messpunkt ausgerichtet werden. Des Weiteren ist der Aufsatzscanner 10 mit einer Kamera 16 ausgestattet, deren Bildfeld ebenfalls über das optische Strahlführungselement 17 auf den Spiegel 11 und von dort in Richtung des Messpunkts gelenkt wird.

In einer zweiten Ausführungsform des erfindungsgemässen Scanmoduls 10 (Figur 1b) verfügt der Aufsatzscanner 10 über ein optisches Strahlführungselement 17a, welches einen (hier: von unten) auf das Modul 10 ausgerichteten Laserstrahl auf den Spiegel 11 und von dort auf den Messpunkt umlenkt. Mit dieser Ausführung kann ein Laserstrahl einer externen, nicht im Scanmodul 10 vorgesehenen Quelle mit den Komponenten des Moduls 10 umgelenkt und zum Scannen verwendet werden. Weiters kann mittels des Spiegels 11 empfangene, reflektierte Strahlung auf einen ebenfalls extern vorgesehenen Detektor geführt werden. Somit kann das Scanmodul 10 ohne eigenes Lasermodul 15 ausgeführt sein. Die Rotation des Spiegels 11 kann wiederum durch einen Motor 14 und die Messung der jeweiligen Rotationswinkel mittels eines Winkelmessers 13 durchgeführt werden. Zudem ist in dieser Ausführungsform eine Verrieglungsvorrichtung 19 vorgesehen, mit welcher das Scanmodul 10 z.B. mit einem Vermessungsgerät in geeigneter Positionierung verbunden werden kann bzw. mittels welcher das Einkoppeln des Laserstrahls exakt durchführbar ist.

In der dritten Ausführungsform (Figur 1c) ist der Aufsatzscanner 10 mit einem optischen Strahlführungselement 17b ausgestattet, mit welchem ein von unten auf das Modul 10 ausgerichteter Laserstrahl auf den Spiegel 11 und von dort auf den Messpunkt umgelenkt werden kann. Hier ist der rotierbare Spiegel 11 exzentrisch zu einer vertikalen Schwenkachse 22 einer Schwenkvorrichtung angeordnet. Ausserdem verfügt das Scanmodul 10 wiederum über einen Motor 14 zum Antrieb der Rotation und über einen Winkelmesser 13 zur Bestimmung des Rotationswinkels des Spiegels 11. Zudem ist eine Strahldurchtrittseinheit 9 gezeigt, mittels derer ein Laserstrahl in das Scanmodul 10 ein- bzw. auskoppelbar ist. Hierfür kann die Strahldurchtrittseinheit 9 beispielsweise mit einem optisch transparenten Fenster ausgebildet sein, durch das der Strahl aufgrund der spezifischen Transmissionseigenschaften transmittierbar ist.

Figur 1d zeigt eine vierte Ausführungsform des Scanmoduls 10, wobei ein von unten auf das Modul 10 ausgerichteter Laserstrahl direkt auf einen mittels Motor 14 um die Rotationsachse 12 rotierbaren Polygonspiegel 11a trifft, der den Strahl umlenkt. Der Strahl wird dabei wiederum durch eine Strahldurchtrittseinheit 9 in das Scanmodul eingekoppelt. Der Laserstrahl kann durch eine externe Strahlquelle erzeugt werden und reflektierte Strahlung kann mittels des Polygonspiegels 11a auf einen ebenfalls externen Detektor, der beispielsweise in einem Vermessungsgerät vorgesehen sein kann, geleitet werden, wodurch das Scanmodul 10 ohne Lasermodul 15 ausgeführt sein kann. Auch in dieser Ausführung ist eine Winkelmessfunktionalität 13 zur Bestimmung der Rotationswinkel vorgesehen.

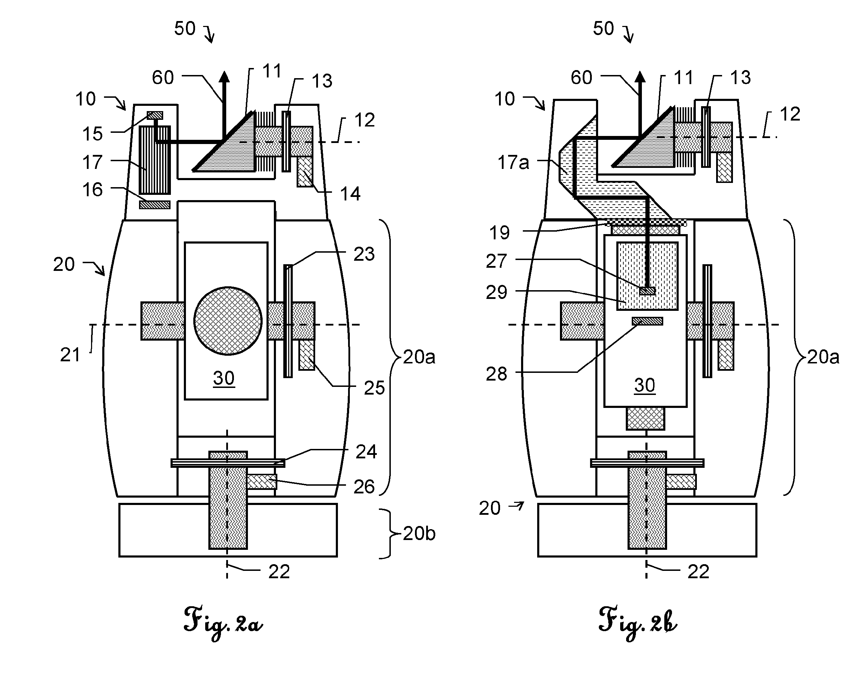

Figur 2a zeigt eine erste Ausführungsform eines erfindungsgemässen Vermessungssystems 50, wobei ein Scanmodul 10 mit einem Vermessungsinstrument 20, z.B. Theodoliten oder Totalstation, kombiniert ist. Das Scanmodul 10 entspricht dabei einem erfindungsgemässen Modul 10 wie in Figur 1a gezeigt mit Spiegel 11, Winkelmesser 13, Motor 14, Rotationsachse 12, Lasermodul 15 und Kamera 16. Bei einem Scanvorgang kann dabei der Spiegel 11 des Aufsatzscanners 10 mit hoher Geschwindigkeit um die horizontale Achse 12 rotieren.

Der gesamte obere Teil des Vermessungsgeräts 20, der zur Aufnahme des Scanmoduls 10 ausgebildete Aufbau 20a, kann dabei gleichzeitig mit geringerer Geschwindigkeit um die vertikale Schwenkachse 22 relativ zur Basis 20b des Vermessungsgeräts 20 geschwenkt bzw. rotiert werden. Dies kann durch einen im Vermessungsinstrument 20 angeordneten Motor 26 bewirkt werden. Während des Scannens kann vom Lasermodul 15 ein Laserstrahl 60 emittiert werden, der über ein optisches Strahlführungselement 17 auf den Spiegel 11 und von dort z.B. auf den Messpunkt geführt wird. Mittels des Laserstrahls 60, seiner Reflexion an einer Oberfläche und des Erfassens mit dem Detektor kann so eine Distanzmessung zum Messpunkt auf der Oberfläche durchgeführt werden. Die Koordinaten des Messpunkts können aus der gemessenen Distanz sowie aus dem mit dem Winkelsensor 13 erfassten Vertikalwinkel bzw. Rotationswinkel und einem mit einem in der Schwenkvorrichtung 20 angeordneten Winkelsensor 24 bestimmten Horizontalwinkel bzw. Schwenkwinkel berechnet werden. Das Vermessungsinstrument 20 weist zudem eine um eine zweite vertikale Achse 21 schwenk- bzw. rotierbare Anzieleinheit 30 auf, insbesondere ein Fernrohr. Das Schwenken der Anzieleinheit 30 kann dabei mittels eines weiteren Motors 25 erfolgen, wobei ein weiterer Schwenkwinkel mit einem Winkelmesssensor 23 messbar ist.

Figur 2b zeigt eine zweite Ausführungsform des erfindungsgemässen Vermessungssystems 50 mit Aufsatzscanner 10 und Vermessungsgerät 20. Hierbei kann das Fernrohr 30 des Vermessungsinstruments 20 nach oben, im Wesentlichen parallel zu dessen vertikaler Achse 22 ausgerichtet und mittels der Verriegelungsvorrichtung 19 in dieser Position gehalten bzw. gesperrt werden. Zum Scannen kann ein Laserstrahl 60 vom Laseremitter 27 im Fernrohr 30 über ein optisches Umlenkelement 29 im Fernrohr 30 auf ein optisches Strahlführungselement 17a im AufsatzScanner 10 und von dort auf dessen Spiegel 11 und gegebenenfalls in weiterer Folge auf den Messpunkt gelenkt werden. Dabei rotiert der Spiegel 11 des Aufsatzscanners 10 mit hoher Geschwindigkeit um die Rotationsachse 12. Der Aufbau 20a des Vermessungsgeräts 20 kann gleichzeitig mit geringerer Geschwindigkeit um die vertikale Achse 22 schwenken bzw. rotieren. Auch hier können die Koordinaten des Messpunkts aus der gemessenen Distanz sowie aus dem mit dem Winkelsensor 13 erfassten Rotationswinkel und dem mit dem Winkelsensor 24 bestimmten Schwenkwinkel berechnet werden. Hierzu werden die Rotationswinkel, Schwenkwinkel und Distanzen für einen jeweiligen Messpunkt z.B. mittels einer am Vermessungssystem 50 vorgesehenen Verarbeitungseinheit verknüpft. Während des Scanvorgangs können das Bildfeld der Kamera 28 des Vermessungsinstruments 20 über die Elemente 17 bzw. 29 und 17a sowie dem Spiegel 11 auf den Messpunkt ausgerichtet und Bilddaten erfasst werden.

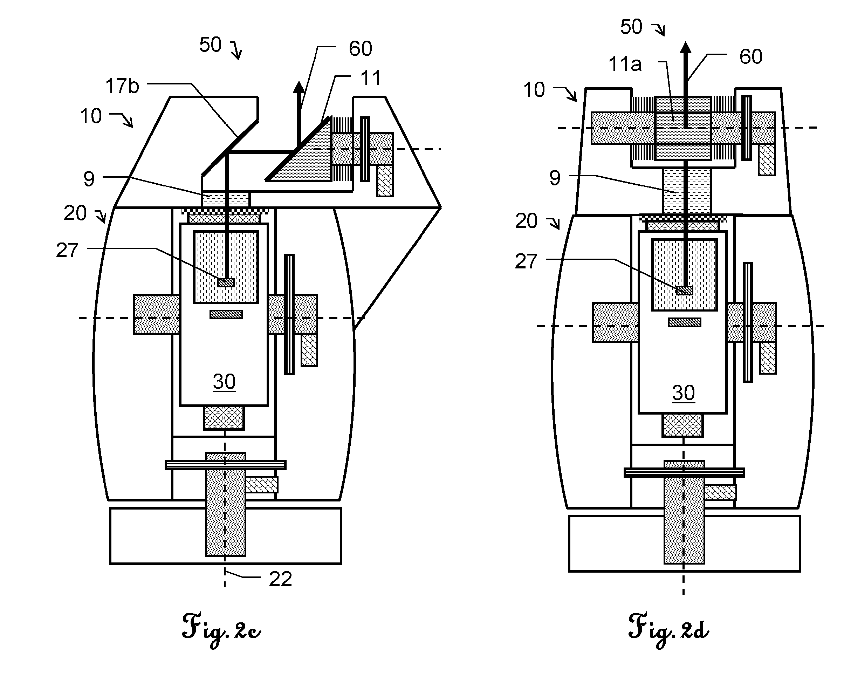

Die Figuren 2c und 2d zeigen eine dritte und eine vierte Ausführungsform des erfindungsgemässen Vermessungssystems 50 mit jeweils einem Vermessungsgerät 20 und einem Scanmodul 10 entsprechend der Ausführungsformen gemäss Figuren 1c und 1d. Beide Ausführungen des Vermessungssystems 50 nutzen einen Laserstrahl 60, der von einer Strahlquelle 27, insbesondere Laserdiode, der Anzieleinheit 30 emittiert und in das Scanmodul 10 geführt wird. Hierfür ist jeweils eine Stahldurchtrittseinheit 9 vorgesehen. Je nach Ausführungsform kann die Stahldurchtrittseinheit 9 beispielsweise als Spiegelschutz oder als Mittel zur Vergrösserung des Gesichtsfeldes der Kamera 28 ausgebildet sein. Der Strahl 60 kann mittels eines Strahlumlenkelements 17b auf den Spiegel 11 oder auf den Polygonspiegel 11a gelenkt und auf eine zu vermessende Oberfläche gerichtet werden. In Figur 2c wird der Laserstrahl 60 dabei exzentrisch zur Schwenkachse 22 vom Spiegel 11 ausgesendet, wobei eine Laserebene erzeugt werden kann, die parallel zur Achse 22 liegt.

Für eine Punktmessung können die jeweiligen Winkel und die Distanz, die zur selben Zeit bzw. in definierten, einander zuordenbaren Zeitabständen erfasst werden, verknüpft werden. Dieses Erfassen kann beispielsweise in der Ausführungsform gemäss Figur 2a vom Vermessungsgerät gesteuert werden indem zum Zeitpunkt der Messung des Horizontalwinkels mit dem Winkelsensor 26 über eine Datenschnittstelle ein Triggersignal zum Aufsatzscanner 10 gesendet wird, welches dort die Messung des Vertikalwinkels mit dem Winkelsensor 13 sowie der Distanz auslöst. Ausserdem kann der Aufsatzscanner 10 zum Zeitpunkt der Messung des Vertikalwinkels und der Distanz ein Triggersignal an das Vermessungsinstrument 20 senden und dort eine gleichzeitige Auslösung bzw. eine Auslösung innerhalb eines bestimmten Zeitintervalls der Horizontalwinkelmessung initiieren. Weiterhin kann das Triggersignal kontinuierlich z.B. bei jeder Punktmessung oder an bestimmten Winkelpositionen z.B. einmal pro Umdrehung des Spiegels 11 gesendet werden, insbesondere in dessen Nadir-Position. Insbesondere können die Messdaten zwischen den Triggersignalen interpoliert werden.

Die vom Scanmodul 10 bestimmten Messdaten (Vertikalwinkel und/oder Distanz) können über eine Datenschnittstelle an das Vermessungsgerät 20 übermittelt werden. Dort können diese gemeinsam mit einem vom Vermessungsgerät 20 bestimmten Horizontalwinkel abgespeichert werden. Insbesondere können in einer Steuerungs- und Verarbeitungseinheit des Vermessungsgeräts 20 aus den Winkeln und der Distanz Punktkoordinaten berechnet und diese abgespeichert werden.

Zudem ist auch die Übermittlung des Horizontalwinkels vom Vermessungsgerät 20 an den Aufsatzscanner 10 denkbar. Dort können dieser gemeinsam mit dem Vertikalwinkel und der Distanz auf einem Speichermodul gespeichert oder daraus mit einer entsprechenden Steuerungs- und Verarbeitungseinheit des Aufsatzscanners 10 Punktkoordinaten berechnet werden. Wird der Horizontalwinkel z.B. in einer geringeren Messrate erfasst und übertragen, können in der Verarbeitungseinheit die gemessenen Winkeln interpoliert werden, sodass nur eine vergleichsweise geringe Anzahl von Winkelwerten vom Vermessungsgerät 20 an den Aufsatzscanner 10 übertragen werden muss, z.B. nur ein Wert pro vertikaler Umdrehung des Spiegels 11 bzw. Polygonspiegels 11a. Weiters kann vor der Datenübertragung oder Speicherung eine Komprimierung, z.B. durch Filterung, der Messdaten oder Punktkoordinaten erfolgen. Mit einer Winkeltriggerung ist eine sehr effiziente Datenkomprimierung möglich, wobei der Winkelsensor der schnellen Achse 12 die Triggerquelle darstellt. In diesem Fall ist es ausreichend, lediglich die Folge der Distanzmesswerte mit den wenigeren Messwinkeln der langsamen Achse 22 abzuspeichern. Aus einer solchen stark reduzierten Folge von Messwerten können die Punktpositionen und die damit assoziierte Punktwolke erzeugt werden.

Darüber hinaus kann der Horizontalwinkel vom Vermessungsgerät 20 sowie der Vertikalwinkel und die Distanz vom Aufsatzscanner 10 an eine externe Verarbeitungseinheit übermittelt werden, z.B. an eine mobile Fernsteuerung, welche sich weder im Vermessungsgerät 20 noch im Aufsatzscanner 10 befindet.

Die Kommunikation zwischen Vermessungsinstrument 20, Aufsatzscanner 10 und z.B. einem Controller kann über eine Drahtverbindung, über Funk (z.B. Bluetooth oder WLAN) und/oder über eine optische, induktive oder kapazitive Schnittstelle erfolgen. Hierfür können an den einzelnen Komponenten des erfindungsgemässen Vermessungssystems 50 geeignete Sende- und Empfangseinheiten vorgesehen sein. Die Energieversorgung des Aufsatzscanners 10 kann ferner durch eine integrierte Batterie oder durch aus dem Vermessungsgerät 20 mittels elektrischer Kontaktierung erfolgen.

Um eine hohe Genauigkeit für eine Koordinatenmessung mittels des Scanmoduls 10 zu gewährleisten, kann eine externe Orientierung des Scanmoduls 10 bestimmt werden. Hierfür kann das Scanmodul 10 an einer definierten Position (womit drei Translationsparameter bekannt sind) sowie in einer definierten Ausrichtung (womit drei Rotationsparameter bekannt sind) auf dem Vermessungsgerät 20 montiert werden. Das Vermessungsgerät 20 kann sich ferner in eine Messumgebung einmessen, insbesondere durch Anzielen von Zielpunkten mit bekannten Koordinaten, wodurch die Position und Ausrichtung des Vermessungsgeräts 20 bekannt ist. Zudem kann eine Abweichung von der definierten Position bzw. Ausrichtung durch Sensoren erfasst und bei z.B. der Berechnung der Koordinaten der Messpunkte berücksichtigt werden. Eine Montage in einer definierten Position und/oder Ausrichtung kann hierbei beispielsweise durch eine mechanische Befestigung oder Zentriereinrichtung realisiert werden, womit eine hohe Positionsgenauigkeit ermöglicht werden kann.

Zusätzlich zum Scanvorgang mit dem Scanmodul 10 kann gleichzeitig auch ein "Scannen" mit dem Vermessungsgerät 20 erfolgen. Dabei kann das Fernrohr 30 mit vergleichsweise geringer Geschwindigkeit um die horizontale Achse 21 rotieren. Der Horizontalwinkel kann dabei mit den Winkelsensor 24 und der Vertikalwinkel mit dem Winkelsensor 23 gemessen - die Distanz mittels

Lasermodul 27 ermittelt werden. Aus diesen Messdaten können die Koordinaten von Messpunkten berechnet werden, welche in Summe eine Punktwolke bilden können.

Nach dem Scannen können somit zwei Punktwolken vorliegen. Eine erste mit hoher Auflösung aber geringer Genauigkeit, die mit dem Scanmodul 10 erfasst wurde, sowie eine zweite mit geringerer Auflösung aber hoher Genauigkeit, welche vom Vermessungsgerät 20 generiert wurde. Durch einen Abgleich der beiden Punktwolken können so systematische Fehler z.B. des Scanmoduls 10 detektiert bzw. korrigiert werden.

Verfügt der Aufsatzscanner 10 über keine eigene Kamera, kann die Bildaufnahme durch eine am Vermessungsgerät 20 vorgesehene Kamera 28 erfolgen. Dafür kann während eines mittels des Aufsatzscanners 10 durchgeführten Scanvorgangs das Fernrohr 30 des Vermessungsgeräts 20 mit geringerer Geschwindigkeit um dessen horizontale Achse 21 schwenken bzw. rotieren. Mit der im Fernrohr 30 eingebauten Kamera 28 (On-axis Kamera, d.h. die Kamera 28 erfasst ein Bild korrespondierend zur Ausrichtung des Laserstrahls 60, insbesondere koaxial) können Bilder aufgenommen und gleichzeitig der Horizontalwinkel und der Vertikalwinkel des Fernrohrs 30 erfasst werden. Durch diese Winkel können bei bekannter Position und Ausrichtung des Aufsatzscanners 10 die Bilddaten mit den Scandaten verknüpft werden. Ferner kann das Vermessungssystem 50 mit einer Übersichtskamera ausgestattet sein, wobei die Übersichtskamera ein im Vergleich zur Kamera 28 grösseres Sichtfeld aufweist und somit einen grösseren Bereich einer Messumgebung erfassen kann. Die Ausgabe der damit erfassten Bilder kann insbesondere einem Benutzer einen Mehrnutzen hinsichtlich der Orientierung und Anzielung von Zielen im Gelände bieten.

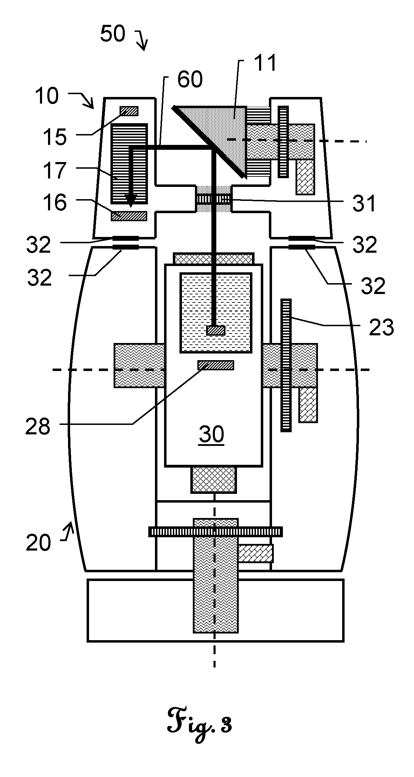

In Figur 3 ist ein Vermessungsgerät 20 mit Scanmodul 10 gemäss der Ausführungsform in Figur 2a gezeigt, wobei der Aufsatzscanner 10 mit einem zusätzlichen optischen Element 31, z.B. Linse oder Filter, ausgestattet ist, um eine für eine Bestimmung einer Position eines Laserpunkts auf der Kamera 16 geeignete optische Abbildung zu gewährleisten. Zudem sind Abstandsmesssensoren 32 zur Bestimmung von Positions- und Ausrichtungsparametern vorgesehen. Wird der Abstand des Aufsatzscanners 10 vom Vermessungsgerät 20 an zumindest drei unterschiedlichen Positionen (welche nicht auf einer Geraden liegen) mit derartigen Sensoren 32 erfasst, kann aus diesen Messungen ein vertikaler Abstand sowie die Längs- und Querneigung des Scanmoduls 10 abgeleitet werden.

Zusätzliche Parameter können dadurch bestimmt werden, dass der Laserstrahl 60 vom Vermessungsgerät 20 über den Spiegel 11 und das Strahlführungselement 17 auf die Kamera 16, welche über einen positionssensitiven Sensor verfügen kann, des Scanmoduls 10 gelenkt wird. Dazu wird das Fernrohr 30 des Vermessungsgeräts nach oben parallel zur vertikalen Achse 22 und der Spiegel 11 des Aufsatzscanners 10 nach unten ausgerichtet. Die Parameter können aus einer erfassten Position des Laserpunkts in einem aufgenommenen Bild des positionssensitiven Sensors abgeleitet werden. Umgekehrt kann auch der Laserstrahl 60 vom Lasermodul 15 des Aufsatzscanners 10 auf den Kamerasensor 28 des Vermessungsgeräts 20 abgebildet und aus dieser Position des Laserpunkts Versatzparameter und Winkelparameter abgeleitet werden. Hierfür kann der Kamerasensor 28 ebenfalls positionssensitiv ausgeführt sein und ausgewertet werden.

Insbesondere kann - z.B. bei einer groben Ausrichtung des Fernrohrs 30 parallel zur vertikalen Achse 22 - bei einer ungefähren Ausrichtung die Winkelabweichung mit dem Winkelsensor 23 erfasst und beispielsweise bei einer Koordinatenberechnung berücksichtigt werden. Zudem können in die Berechnung Kalibrationsparameter des Vermessungsinstruments 20 (z.B. Korrekturen des Ziellinienfehlers und/oder Kippachsfehlers) und des Aufsatzscanners 10 mit einfliessen.

Zudem kann der Aufsatzscanner 10 mit einem Neigungssensor ausgestattet sein, welcher die Neigung in Längs- und Querrichtung in Bezug zum Schwerefeld erfasst. Dieser kann dazu verwendet werden, um die Messungen des Aufsatzscanners hinsichtlich der Abweichung der Schwenkachse (vertikalen Achse) von einer Lotrichtung zu korrigieren.

Weiters kann aus der Differenz zwischen den gemessenen Neigungen des Aufsatzscanners 10 und einer Neigung, die mit einem Neigungssensor des Vermessungsgeräts 20 bestimmt wird, eine relative Neigung des Aufsatzscanners 10 in Relation zum Vermessungsgerät 20 berechnet werden.

Eine horizontale Verschwenkung des Aufsatzscanners 10 in Relation zum Vermessungsgerät 20 kann ausserdem durch Abscannen einer markanten Struktur, beispielsweise einer vertikalen Hauskante, durch den Aufsatzscanner 10 einerseits und durch das Vermessungsgerät 20 andererseits erfolgen, wobei der Differenzwinkel basierend auf einem horizontalen Versatz der beiden dabei gewinnbaren Punktwolken bestimmt werden kann.

Der Aufsatzscanner 10 kann ferner mit einem Speichermodul ausgestattet sein, sodass die erfassten Messdaten direkt im Aufsatzscanner gespeichert werden können. Parallel dazu können die Messdaten des Vermessungsgeräts 20 auf einem dort angeordneten Speicher gespeichert werden. Die Synchronisierung des Aufsatzscanners 10 und des Vermessungsgeräts 20 kann mittels eins Triggersignals erfolgen, welches vom Vermessungsgerät 20 zum Aufsatzscanner 20 (oder umgekehrt) übermittelt wird. Dabei kann die Synchronisierung auf Basis eines jeweils mit dem Vermessungsgerät 20 und dem Aufsatzscanner 10 empfangenen Zeitsignals erfolgen, wobei den beiden Komponenten jeweils ein Zeitempfänger zugeordnet ist. Insbesondere kann die Synchronisierung auch durch zwei GPS-Empfänger erfolgen, welche jeweils die GPS-Zeit empfangen, wobei jeweils ein GPS-Empfänger am Vermessungsgerät 20 und Aufsatzscanner 20 angeordnet ist. Die erfassten Zeitsignale können jeweils mit Messwerten verknüpft (den Messdaten kann beispielsweise ein Zeitstempel zugeordnet werden) und mittels der Verknüpfung eine nachfolgende Zuordnung der der Messwerte erfolgen.

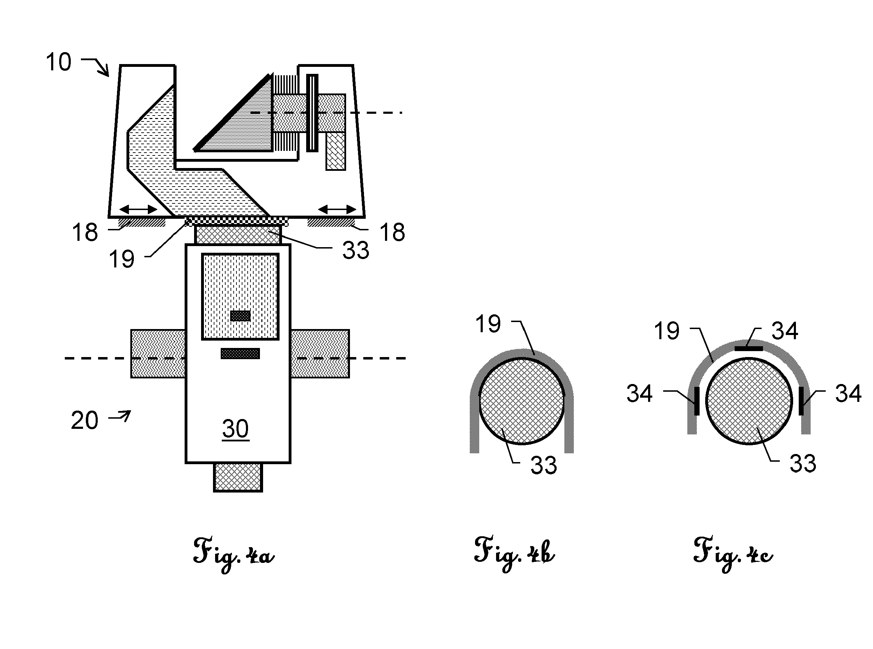

Figur 4a zeigt ein Scanmodul 10 mit einem Vermessungsinstrument 20, wobei zudem einem mechanische Arretierung bzw. Zentrierung der beiden Komponenten, insbesondere in Zusammenschau mit den Figuren 4b und 4c, gezeigt ist. Das Strahlaustrittsende 33, insbesondere das Objektiv, des Fernrohrs 30 wird dabei in seiner dargestellten Ausrichtung von der Verriegelungsvorrichtung 19 derart aufgenommen, dass eine dadurch verursachte laterale Verschiebung, welche durch die geeignete Ausführung der Befestigungsvorrichtungen 18 ermöglicht wird, eine Zentrierung des Aufsatzscanners 10 relativ zum Vermessungsinstrument 20 bewirkt. Insbesondere ist in Figur 4c eine Verriegelungsvorrichtung 19 dargestellt, bei der der Aufsatzscanner 10 mit einer groben Positionierung relativ zum Strahlaustrittsende 33 verriegelt ist und ein verbleibender Versatz zu einer SollPosition mittels Abstandssensoren 34 erfasst und rechnerisch bei der Koordinatenbestimmung des Messpunkts berücksichtigt werden kann.

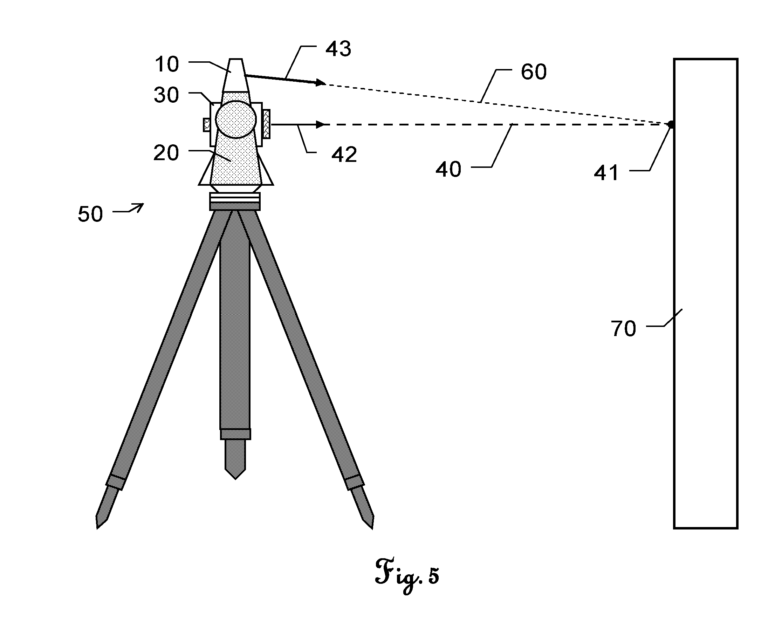

In Figur 5 ist ein Messvorgang mit einem erfindungsgemässen Vermessungssystem 50, insbesondere zur Kalibrierung des Systems 50, gezeigt. Bei der Kalibrierung können Parameter bestimmt werden, welche z.B. mechanische Abweichungen von einer Soll-Geometrie beschreiben und zur Berechnung von Kompensationen bzw. Korrekturen der Messwerte verwendet werden. Interne Kalibrationsparameter wie z.B. der Winkel des Spiegels 11 in Relation zu dessen Rotationsachse 12 oder der Auftreffwinkel des Laserstrahls 60 auf den Spiegel 11 können im Allgemeinen nach der Fertigung des Scanmoduls 10 bestimmt werden. Diese Parameter können nach längeren Zeitintervallen der Benutzung des Geräts mit entsprechenden Verfahren überprüft und gegebenenfalls korrigiert werden, um eine hohe Präzision des Systems 50 gewährleisten zu können. Ferner können die im folgenden beschriebenen Messungen auch dazu dienen, eine externe Orientierung des Aufsatzmoduls 10 in Bezug zum Vermessungsgerät 20, insbesondere in Kombination mit Messung durch zusätzliche Sensoren, zu bestimmen.

Zur Kalibrierung werden Messungen durchgeführt, anhand derer die Kalibrationsparameter - meist durch eine Ausgleichsrechnung - bestimmt werden können. Dazu kann z.B. das Vermessungsgerät 20 auf einen Zielpunkt 41 auf einem Objekt 70 mit bekannter Entfernung ausgerichtet werden. Aus der bekannten Entfernung sowie aus den mit den Winkelsensoren 23 und 24 erfassten Winkeln kann eine Referenzzielrichtung 42 im Koordinatensystem des Vermessungsgeräts 20 bestimmt werden. Gleichzeitig kann der Spiegel 11 derart auf den durch einen Laserstrahl 40 markierten Punkt 41 ausgerichtet werden, dass dieser als Laserpunkt im Bild der Kamera 16 des Scanmoduls 10 abgebildet wird. Durch Messungen mit den Winkelsensoren 13 und 24 sowie der Bestimmung der Position des Laserpunkts 41 im aufgenommenen Kamerabild kann eine Richtung 43 bestimmt werden. Eine Bestimmung der Kalibrationsparameter kann durch einen Abgleich der Referenzrichtungen 42 und der Richtungen 43 mit mehreren Punkten erfolgen, wobei die Anzahl und die räumliche Verteilung der zu bestimmenden Punkt-Positionen von den zu bestimmenden Parametern abhängt.

Besonders vorteilhaft sind Messungen auf den selben Punkt 41 in zwei Kreislagen, d.h. nachdem der Punkt in der ersten Kreislage gemessen wurde, wird das Vermessungsgerät 20 mit dem Aufsatzscanner 10 horizontal um 180° gedreht und dann das Fernrohr 30 des Vermessungsgeräts 20 sowie der Spiegel 11 des Aufsatzscanners 10 vertikal derart gedreht, dass der selbe Punkt 41 in der zweiten Kreislage gemessen werden kann.

Das Verfahren kann auch umgekehrt erfolgen, indem der Laserstrahl 60 des Aufsatzscanners 10 einen Punkt 41 markiert und dieser mit der Kamera 28 im Vermessungsgerät 20 erfasst wird.

Ist die Entfernung zum Punkt nicht bekannt, kann eine Distanzmessung mittels des Lasermoduls 27 durchgeführt werden. Aus der Distanz und den mit den Winkelsensoren 23 und 24 bestimmten Winkeln können die Koordinaten dieses Punktes 41 im Koordinatensystem des Vermessungsgeräts 20 bestimmt werden. Aus diesen Koordinaten kann eine Referenzzielrichtung 43 für den Aufsatzscanner 10 abgeleitet werden.

Verfügen weder Vermessungsgerät 20 noch Aufsatzscanner 10 über eine Kamera, können die für die Kalibrierung benötigten Messungen manuell in abgewandelter Form durchgeführt werden. Dazu kann der Laserstrahl 60 des Aufsatzscanners 10 auf einen signifikanten Punkt 41, z.B. eine Zielmarke, ausgerichtet werden. Dabei werden die Winkel mit den Winkelsensoren 13 und 24 gemessen und somit die Richtung 43 bestimmt. Durch Drehen des Vermessungsgeräts 20 um die vertikale Achse 22 sowie durch Drehen des Fernrohrs 30 um die horizontale Achse 21 wird der Laserstrahl 40 des Vermessungsgeräts 20 auf exakt den selben Punkt ausgerichtet und die Winkel mit den Winkelsensoren 23 und 24 gemessen und daraus die Referenzrichtung 42 abgeleitet. Die Ausrichtung des Fernrohrs 30 kann durch zur Deckung bringen des Laserstrahls 40 mit dem signifikanten Punkt 41, z.B. der Zielmarke, oder durch herkömmliches Anzielen mittels eines Fadenkreuzes erfolgen. Kalibrationsparameter, die sich auf die Distanzmessung des Aufsatzscanners 10 beziehen, z.B. Distanzoffset und/oder Distanzskalierung, können basierend auf Messungen der Distanz auf gleiche Punkte in unterschiedlichen Abständen mit dem Vermessungsgerät 20 und dem Aufsatzscanner 10 ermittelt werden.

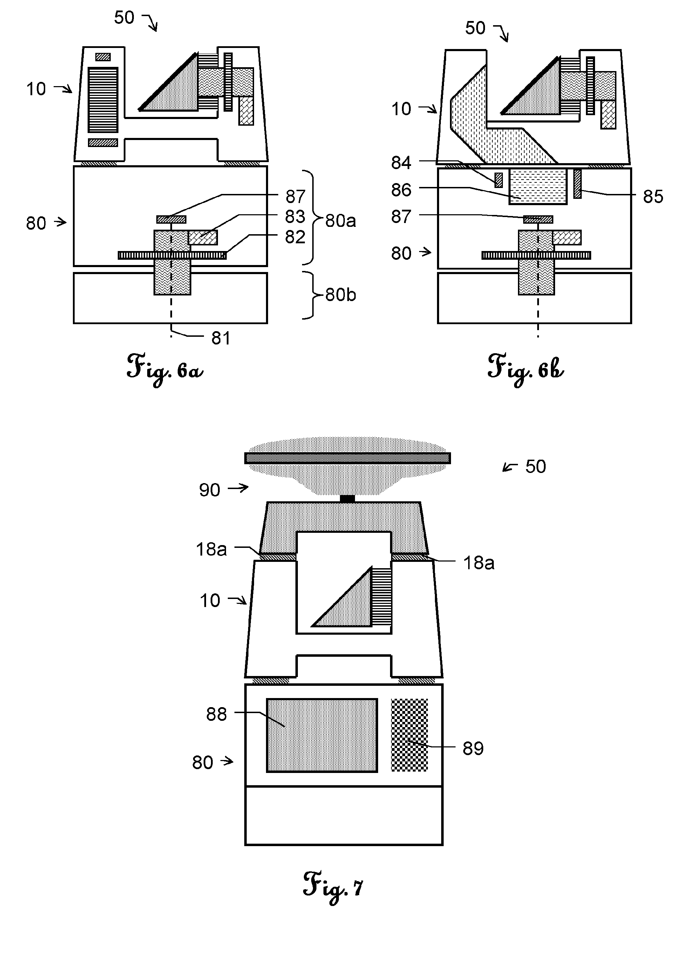

Insbesondere kann das Scanmodul 10 ferner mittels einer motorisierten Schwenkvorrichtung 80 geschwenkt bzw. rotiert werden. Die Figuren 6a und 6b zeigen hierzu jeweils eine weitere Ausführungsform eines erfindungsgemässen Vermessungssystems 50 mit einer Schwenkvorrichtung 80 und einem Scanmodul 10. In Figur 6a ist ein Aufsatzscanner 10 mit einer ersten Ausführungsform einer Schwenkvorrichtung 80 dargestellt. Die Vorrichtung 80 weist eine untere Basis 80b und eine um die vertikale Achse 81 schwenkbaren oberen Aufbau 80a auf, wobei das Schwenken durch einen Motor 83 erfolgen und der Schwenkwinkel mit einem Winkelsensor 82 erfasst werden kann.

Eine zweite Ausführungsform für die motorisierte Schwenkvorrichtung 80 wird in Figur 6b gezeigt. Diese ist zusätzlich mit einem Lasermodul 84, einer Kamera 85 und einem optischen Umlenkelement 86 ausgestattet. Ein Scanvorgang mit diesen beiden Ausführungsformen kann analog zu den Ausführungsformen gemäss Figuren 2a und 2b erfolgen. Beide Ausführungen können zusätzlich mit einem, insbesondere zweidimensionalen, Neigungssensor 87, einem Magnetkompass, einem Display, insbesondere einem berührungsempfindlichen Display, und/oder einem abnehmbaren Bedienelement ausgestattet sein.

Figur 7 zeigt eine weitere Ausführungsform eines erfindungsgemässen Vermessungssystems 50 mit Schwenkvorrichtung 80, Scanmodul 10 und einer aufgesetzten GNSS-Einheit bzw. GNSS-Antenne 90. Der Aufsatzscanner 10 kann dafür mit Befestigungsvorrichtungen 18a zur Montage der GNSS-Antenne 90 ausgestattet sein. Zudem weist die Schwenkvorrichtung 80 ein Display 88 zur Anzeige von Information und ein Bedienfeld 89, insbesondere zur Eingabe von Steuerbefehlen, auf.

Es versteht sich, dass diese dargestellten Figuren nur mögliche Ausführungsbeispiele schematisch darstellen. Die verschiedenen Ansätze können erfindungsgemäss ebenso miteinander sowie mit Systemen und Verfahren zum Vermessen von Oberflächen bzw. Objekten und mit Vermessungsgeräten des Stands der Technik kombiniert werden.

## Patentansprüche

1. Vermessungssystem (50) mit
● einem Vermessungsgerät (20), insbesondere Totalstation, Theodolit oder Lasertracker, mit
□ einer Basis (20b),
□ einem auf der Basis (20b) angeordneten, um eine Schwenkachse (22) schwenkbaren Aufbau (20a),
□ einer Anzieleinheit (30), insbesondere Ziel-Fernrohr, wobei die Anzieleinheit (30) wenigstens aufweist,
· eine eine optische Zielachse definierende Emissionseinheit zur Emission eines ersten Laserstrahls, und
· eine erste Entfernungsmessfunktionalität zur Messung einer Entfernung zu einem Objekt (70), und
□ einer ersten Winkelmessfunktionalität (24) zur hochpräzisen Erfassung zumindest eines durch eine relative Schwenkposition des Aufbaus (20a) zur Basis (20b) definierten Schwenkwinkels, und
● einer Steuerungs- und Verarbeitungseinheit zur Datenverarbeitung und zur Steuerung des Vermessungssystems (50),
**dadurch gekennzeichnet, dass**
● das Vermessungssystem (50) ein Scanmodul (10) aufweist mit
□ Befestigungsmitteln (18) zur Befestigung des Scanmoduls (10) an einer mit den Befestigungsmitteln korrespondierenden Aufnahme,
□ einem um eine Rotationsachse (12) motorisiert rotierbaren Strahlumlenkelement (11, 11a) zur Ablenkung eines Scanlaserstrahls (60), wobei die Rotationsachse (12) in einem aufgenommenen Zustand in einem definierten Winkel relativ zur Schwenkachse (22) steht, insbesondere senkrecht, und
□ einer zweiten Winkelmessfunktionalität (13) zur Bestimmung eines Rotationswinkels aus einer Winkelstellung des Strahlumlenkelements (11, 11a),
● das Vermessungsgerät (20) eine derart ausgebildete Aufnahme aufweist, dass das Scanmodul (10) durch ein Zusammenwirken der Aufnahme mit den Befestigungsmittel (18) auf dem Vermessungsgerät (20) in einer definierten Positionierung modulartig befestigbar ist, und
● die Steuerungs- und Verarbeitungseinheit derart ausgebildet ist, dass
□ der jeweilige Rotationswinkel, der jeweilige Schwenkwinkel und die jeweilige Entfernung für einen Punkt auf dem Objekt (70) verknüpft werden, sodass durch die Verknüpfung jeweils eine Punkt-Position definiert ist, und
□ eine eine Anzahl der Punkt-Positionen aufweisende Punktwolke erzeugbar ist.

2. Vermessungssystem (50) nach Anspruch 1,
**dadurch gekennzeichnet, dass**
das Scanmodul (10) eine Strahldurchtrittseinheit (9) aufweist und die Anzieleinheit (30) derart ausrichtbar ist, dass der erste Laserstrahl in einem Einkoppelzustand vermittels der Strahldurchtrittseinheit (9) in das Scanmodul (10) einkoppelbar ist und vermittels des Strahlumlenkelements (11, 11a) um die Rotationsachse (12) als Scanlaserstrahl (60) rotierend ablenkbar ist, insbesondere wobei ein am Objekt (70) reflektierte Scanlaserstrahl (60) vermittels der Strahldurchtrittseinheit (9) aus dem Scanmodul (10) auskoppelbar ist.

3. Vermessungssystem (50) nach Anspruch 2,
**dadurch gekennzeichnet, dass**
das Scanmodul (10) eine derart ausgebildete Erfassungseinheit (16) aufweist, dass eine Auftreffposition des im Einkoppelzustand mittels des Strahlumlenkelements (11, 11a) auf die Erfassungseinheit (16) umlenkbaren ersten Laserstrahls auf der Erfassungseinheit (16) erfassbar ist, wobei in Abhängigkeit der Auftreffposition ein eine relative Positionierung des Scanmoduls (10) zum Vermessungsgerät (20) angebender Positionierungsparameter erzeugbar ist, insbesondere wobei mittels des Positionierungsparameters die Punkt-Positionen korrigierbar sind.

4. Vermessungssystem (50) nach einem der Ansprüche 1 bis 3,
**dadurch gekennzeichnet, dass**
das Scanmodul (10) eine Strahlquelle (15) zur Emission eines zweiten Laserstrahls als Scanlaserstrahl (60) aufweist und der Scanlaserstrahl (60) vermittels des Strahlumlenkelements (11, 11a)) um die Rotationsachse (12) rotierend ablenkbar ist, insbesondere wobei das Scanmodul (10) eine zweite Entfernungsmessfunktionalität zur Entfernungsmessung, insbesondere mittels des Scanlaserstrahls (60), aufweist.

5. Vermessungssystem (50) nach einem der Ansprüche 1 bis 4,
**dadurch gekennzeichnet, dass**
das Vermessungssystem (50) eine zumindest zweikomponentige Zentriervorrichtung zur definierten Positionierung des Scanmoduls (10) auf dem Vermessungsgerät (20) aufweist, wobei eine erste Komponente (19) dem Scanmodul (10) und eine zweite Komponente (33) dem Vermessungsgerät (20) zugeordnet ist, insbesondere wobei eine Positionierungsgenauigkeit mittels Sensoren (34) zur Bestimmung einer relativen Positionierung der ersten zur zweiten Komponente (19,33) messbar ist.

6. Vermessungssystem (50) nach einem der Ansprüche 1 bis 5,
**dadurch gekennzeichnet, dass**
das Vermessungssystem (50) mindestens einen Abstandsmesssensor (32) zur Messung eines Abstands zwischen dem Scanmodul (10) und dem Vermessungsgerät (20) im aufgenommenen Zustand zur Erzeugung eines weiteren, die relative Positionierung des Scanmoduls (10) zum Vermessungsgerät (20) angebenden Positionierungsparameters aufweist, und/oder
das Vermessungssystem (50) eine Kamera (16,28,85) zur Erfassung eines Bildes aufweist.

7. Vermessungssystem (50) nach einem der Ansprüche 1 bis 6,
**dadurch gekennzeichnet, dass**
eine Neigung des Scanmoduls (10) relativ zum Vermessungsgerät (20) mittels eines Abscannens einer markanten Struktur bestimmbar ist, wobei die Neigung in Abhängigkeit eines Vergleichs einer mittels des Scanmoduls (10) erzeugten, die markante Struktur repräsentierenden Scanpunktwolke und einer mittels des Vermessungsgeräts (20) erzeugten, die markante Struktur repräsentierenden Vermessungspunktwolke bestimmt wird.

8. Scanmodul (10) für ein Vermessungssystem (50) nach einem der Ansprüche 1 bis 7 mit
● einem um eine Rotationsachse (12) motorisiert rotierbaren Strahlumlenkelement (11, 11a) zur Ablenkung eines Scanlaserstrahls (60) und
● einer Winkelmessfunktionalität (13) zur Bestimmung eines Rotationswinkels aus einer Winkelstellung des Strahlumlenkelements (11, 11a),
**dadurch gekennzeichnet, dass**
● das Scanmodul (10) Befestigungsmittel (18) zur Befestigung des Scanmoduls (10) an einer mit den Befestigungsmitteln (18) korrespondierenden Aufnahme aufweist, wobei das Scanmodul (10) durch ein Zusammenwirken der Befestigungsmittel (18) mit der an einem Vermessungsgerät (20) angeordneten Aufnahme, insbesondere Totalstation, Theodolit oder Lasertracker, auf dem Vermessungsgerät (20) in einer definierten Positionierung modulartig befestigbar ist, und
● das Scanmodul (10) zur Übergabe des Rotationswinkels an eine Steuerungs- und Verarbeitungseinheit gemäss dem Vermessungssystem (50) nach Anspruch 1 ausgebildet ist.

9. Scanmodul (10) nach Anspruch 8,
**dadurch gekennzeichnet, dass**
das Scanmodul (10) eine Strahldurchtrittseinheit (9) zur Einkopplung und/oder Auskopplung des Scanlaserstrahls (60) aufweist, sodass zumindest der eingekoppelte Scanlaserstrahl (60) vermittels des Strahlumlenkelements (11, 11a) um die Rotationsachse (12) rotierend ablenkbar ist.

10. Scanmodul (10) nach Anspruch 8 oder 9,
**dadurch gekennzeichnet, dass**
das Scanmodul (10) eine Strahlquelle (15) zur Emission des Scanlaserstrahls (60) aufweist und der Scanlaserstrahl (60) vermittels des Strahlumlenkelements (11, 11a) um die Rotationsachse (12) rotierend ablenkbar ist, und/oder
das Scanmodul (10) eine Erfassungseinheit (16) zur Erfassung des Scanlaserstrahls (60) aufweist, wobei die Erfassungseinheit (16) eine Entfernungsmessfunktionalität zur Entfernungsmessung zu einem Objekt (70) und/oder einen positionssensitiven Sensor zur Bestimmung einer Auftreffposition des Scanlaserstrahls (60) auf einem Sensor aufweist.

11. Scanmodul (10) nach einem der Ansprüche 8 bis 10,
**dadurch gekennzeichnet, dass**
das Scanmodul (10) eine derart ausgebildete Datenschnittstelle aufweist, dass Information, insbesondere Winkelinformation und/oder Entfernungsinformation, vom Scanmodul (10) zu einem mittels der Befestigungsmittel (18) mit dem Scanmodul (10) verbundenen Gerät (20,80), insbesondere Vermessungsgerät (20), übertragbar ist, insbesondere wobei die Information zwischen Scanmodul (10) und Gerät (20,80) übertragbar ist.

12. Scanmodul (10) nach einem der Ansprüche 8 bis 11, **dadurch gekennzeichnet, dass**
das Scanmodul (10) eine Steuerungs- und Verarbeitungseinheit zur Datenverarbeitung und zur Steuerung der Ausrichtung des Strahlumlenkelements (11, 11a) aufweist, wobei die Steuerungs- und Verarbeitungseinheit derart ausgebildet ist, dass nach Erhalt einer vom Vermessungsgerät (20) erzeugten Schwenkwinkelinformation und insbesondere einer die Entfernung zu einem Objekt (70) angebenden Entfernungsinformation
● der jeweilige Rotationswinkel, der jeweilige Schwenkwinkel und die jeweilige Entfernung für einen Punkt auf dem Objekt (70) verknüpft werden, sodass durch die Verknüpfung jeweils eine Punkt-Position auf dem Objekt (70) definiert ist, und
● eine eine Anzahl der Punkt-Positionen aufweisende Punktwolke erzeugbar ist.

13. Vermessungsgerät (20), insbesondere Totalstation, Theodolit oder Lasertracker, für ein Vermessungssystem nach einem der Ansprüche 1 bis 7 mit
● einer Basis (20b),
● einem auf der Basis (20b) angeordneten, um eine Schwenkachse (22) schwenkbaren Aufbau (20a),
● einer Anzieleinheit (30), insbesondere Ziel-Fernrohr, wobei die Anzieleinheit (30) wenigstens aufweist,
□ eine eine optische Zielachse definierende Emissionseinheit zur Emission eines Laserstrahls, und
□ eine Entfernungsmessfunktionalität zur Messung einer ersten Entfernung zu einem Objekt (70), und
● einer Winkelmessfunktionalität (24) zur hochpräzisen Erfassung zumindest eines durch eine relative Schwenkposition des Aufbaus (20a) zur Basis (20b) definierten Schwenkwinkels,
**dadurch gekennzeichnet, dass**
das Vermessungsgerät (20) weiter aufweist
● eine derart ausgebildete Aufnahme, dass ein Scanmodul (10) durch ein Zusammenwirken der Aufnahme mit Befestigungsmitteln (18) des Scanmoduls (10)auf dem Vermessungsgerät (20) in einer definierten Positionierung modulartig befestigbar ist,
● eine derart ausgebildete Datenschnittstelle, dass Information, insbesondere Winkelinformation und/oder Entfernungsinformation, erhaltbar ist, insbesondere vom Scanmodul (10), und
● eine Steuerungs- und Verarbeitungseinheit zur Datenverarbeitung und zur Steuerung des Vermessungsgeräts (20), wobei die Steuerungs- und Verarbeitungseinheit derart ausgebildet ist, dass nach Erhalt einer vom Scanmodul (10) erzeugten Rotationswinkelinformation und insbesondere einer eine zweite Entfernung zum Objekt (70) angebenden Entfernungsinformation
□ der jeweilige Rotationswinkel, der jeweilige Schwenkwinkel und die jeweilige erste oder zweite Entfernung für einen Punkt auf dem Objekt (70) verknüpft werden, sodass durch die Verknüpfung jeweils eine Punkt-Position auf dem Objekt (70) definiert ist, und
□ eine eine Anzahl der Punkt-Positionen aufweisende Punktwolke erzeugbar ist.

14. Scanverfahren zum Erzeugen einer Punktwolke mit
● einem Emittieren eines Scanlaserstrahls (60),
● einem rotativen Ablenken des Scanlaserstrahls (60) um eine Rotationsachse (12),
● einem Schwenken des Scanlaserstrahls (60) um eine in einem definierten Winkel, insbesondere senkrecht, zur Rotationsachse (12) stehende Schwenkachse (22),
● einem Empfangen des Scanlaserstrahls (60) nach Reflexion an einem Objekt (70),
● einem Entfernungsmessen zum Objekt (70) und jeweiligem Bestimmen von Rotations- und Schwenkwinkeln,
● einem Verknüpfen des jeweiligen Rotationswinkels, des jeweiligen Schwenkwinkels und der jeweiligen Entfernung für einen Punkt auf dem Objekt (70), sodass durch das Verknüpfen jeweils eine Punkt-Position auf dem Objekt (70) definiert wird, und
● einem Erzeugen einer eine Anzahl der Punkt-Positionen aufweisende Punktwolke,
wobei
● zumindest das rotative Ablenken des Scanlaserstrahls (60) mittels eines Scanmoduls (10) nach einem der Ansprüche 8 bis 12 erfolgt.

15. Computerprogrammprodukt mit Programmcode, der auf einem maschinenlesbaren Träger gespeichert ist, zur Steuerung bzw. Durchführung des Scanverfahrens zum Erzeugen einer Punktwolke nach Anspruch 14, insbesondere wenn das Programm auf einer als Steuerungs- und Verarbeitungseinheit eines Vermessungssystem (50) nach einem der Ansprüche 1 bis 7 ausgebildeten elektronischen Datenverarbeitungseinheit ausgeführt wird.
